# EUROPEAN PATENT SPECIFICATION

(11) **EP 3 350 565 B1**
(45) Date of publication and mention of the grant of the patent: **14.05.2025**
(21) Application number: 16845827.1
(22) Date of filing: 20.09.2016
(51) Int. Cl.: G01N 1/40, G01N 1/31, G01N 27/447, B01L 3/00

(54) **SMALL SAMPLE INJECTION VIAL**
KLEINES PROBENINJEKTIONSFLÄSCHCHEN
PETIT FLACON D'INJECTION D'ÉCHANTILLON

(30) Priority: 20.09.2015 US 201562221094 P
(43) Date of publication of application: 25.07.2018
(73) Proprietor: DH Technologies Development PTE. Ltd., Singapore 739256 (SG)
(72) Inventor: LIES, Mark, Long Beach, California 90803-3644 (US); LIN, Erika, Modesto, California 95350 (US); ROUSHALL, Randy, Redwood City, California 94062 (US); SANTOS, Marcia, Lake Elsinore, California 92532 (US)
(74) Representative: J A Kemp LLP
(86) International application number: PCT/IB2016/055608
(87) International publication number: WO 2017/046783

(56) References cited:
- US-A- 5 938 905
- US-A1- 2004 112 749
- US-A1- 2006 252 047
- US-A1- 2014 374 299
- US-B1- 6 475 362
- US-B1- 6 547 943
- US-B2- 8 715 558

## Description

### FIELD

The invention generally relates to a small sample injection vial for interfacing with an analytical instrument.

### INTRODUCTION

Capillary electrophoresis (CE) is an analytical method that utilizes differences in electrophoretic mobility between analytes to separate sample substances. Generally, CE is performed in a capillary tube, which is typically open on both ends and to which an electric field is typically applied which causes electrophoretic separation of the analytes within the sample. The electric field is applied by means of electrodes that are arranged at the ends of the capillary and connected to a high voltage power supply. The capillary is filled with an electrically conductive electrolyte so that the electric field can build up within the capillary.

When sample substances are to be introduced into the capillary for subsequent separation, the capillary is generally immersed in a vial containing the sample. In one common method for injecting the sample into the capillary known as electrokinetic injection, electromigration of sample analytes is caused by generating an electric field in the sample through the simultaneous immersion of an electrode that is generally disposed parallel and offset from the electrode. One such exemplary CE instrument utilizing electrokinetic injection is the P/ACE^{™} MDQ Plus marketed by SCIEX, which can perform an automated CE analysis on a plurality of sample vials contained within a tray. In particular, the tray containing the vials is maneuvered relative to the instrument's capillary/electrode probe such that samples from various vials can be injected and analyzed serially. Though one format of an instrument is to use a single capillary and electrode pair, instruments can be configured with multiple capillary/electrode pairs to analyze sample in parallel (at the same time) such as in US Patent No. 6,547,943.

Though CE is well-regarded due its high-resolution separation and minimal volumes of samples and reagents actually utilized in the CE analysis, the sample vials must nonetheless contain a sufficient volume of sample to allow the parallel electrode and capillary to consistently penetrate the liquid. Rather than wide, 2 mL cylindrical vials traditionally utilized in interfacing with some CE instruments, some vendors have recently created narrow vial "inserts" that fit within the standard vials and attempt to "stand up" the fluid in the sample vial by reducing the maximum inner diameter of the vial and by terminating in a frusto-conical bottom (e.g., Eppendorf tubes). Such small-volume inserts typically provide a maximum volume of 200 µL, but nonetheless require a minimum volume of 20-50 µL of sample to insure injection. Accordingly, even in such "small-volume" vials, a significant amount of the sample is wasted as it is unable to be accessed by the sample probe.

In some cases, users only want to use very small sample when the sample is scarce or the sample is very expensive. Using small amounts of sample allows users to perform multiple experiments on the same sample and preserve their valuable sample for future experiments.

### SUMMARY

Accordingly, there remains a need to eliminate or reduce the waste of expensive and/or scarce samples common in the round vials and vial inserts conventionally used in the art. Because the capillary and the parallel, offset electrode of conventional CE sampling probes must both penetrate the sample, the "narrowing" of conventional vials is necessarily limited by the offset distance between these elements in order to avoid contact with the inner wall of the vial. In accordance with various aspects of the present teachings, Applicants provide a non-round, polarized vial (or insert) that allows for very small sample volumes to be sampled by CE probes, and without giving up large volume containment. Though typically described herein with reference to a capillary electrophoresis (CE) instrument having a parallel electrode and capillary that are to be simultaneously immersed in the sample contained by the sample vial for electrokinetic injection thereof, it should be appreciated that sample vials in accordance with the present teachings are not limited to such use. Rather, a person skilled in the art will appreciate that the present teachings can provide significant reductions in the volume of sample that must be contained within a sample vial for interfacing with a variety of analytical instruments, and particularly, for analytical instruments that interact with a sample via a "polar" or asymmetric probe including in applications such as liquid chromatography and gas chromatography, by way of non-limiting example.

In accordance with the present invention, there is disclosed a vial for use with a capillary electrophoresis, CE, instrument having a sampling capillary and an electrode, the distal ends of which are configured for immersion within a sample contained with the vial, the vial comprising: a first body extending from a superior end to an inferior end along a longitudinal axis, an external surface of the first body having a circular cross-sectional shape substantially along its entire length from the superior end to the inferior end, an inner wall of the first body defining a first fluid chamber extending from the superior end for containing the sample; characterized in that: a second body is coupled to the first body; an external surface of the second body has a circular cross-sectional shape substantially along its entire length from a superior end to an inferior end; an inner wall of the second body defines a second fluid chamber extending from the superior end for containing a second sample; the first and second fluid chambers are not fluidly coupled; a cross-sectional shape of the first fluid chamber in at least one plane orthogonal to the longitudinal axis of the first body exhibits at most two or fewer axes of symmetry; and a cross-sectional shape of the second fluid chamber of the second body in at least one plane orthogonal to the longitudinal axis of the second body exhibits at most two or fewer axes of symmetry.

In accordance with various aspects of the present teachings, the vial is preferably for use with an asymmetric sampling probe of an analytical instrument.

In related aspects, the cross-sectional shapes of the fluid chamber in at least one other plane orthogonal to the longitudinal axis can exhibit more than two axes of symmetry (e.g., circular or square).

In various aspects, the fluid chamber further comprises: a first fluid compartment configured to receive a distal end of an electrode of the CE instrument, and a second fluid compartment configured to receive a distal end of a sampling capillary of the CE instrument, wherein the first fluid compartment and the second fluid compartment are in fluid communication.

In various related aspects, the first fluid compartment extends along a first longitudinal axis and the second fluid compartment extends along a second longitudinal axis, wherein the first and second longitudinal axes are substantially parallel to the longitudinal axis of the body. In some aspects, the first and second longitudinal axes are offset from the longitudinal axis of the body. Additionally, in some aspects, the first longitudinal axis is configured to align with the longitudinal axis of the electrode and the second longitudinal axis is configured to align with the longitudinal axis of the sampling capillary.

In various aspects, the first fluid compartment extends from a superior end to an inferior end, the superior end of the first fluid compartment being inferior to the superior end of the body. Likewise, the second fluid compartment extends from a superior end to an inferior end, the superior end of the second fluid compartment being inferior to the superior end of the body. In related aspects, the inferior end of the first fluid compartment can be inferior to the inferior end of the second fluid compartment.

The first and second compartments can have a variety of shapes. In one aspect, for example, the first and second fluid compartments can be substantially frusto-conical. As noted above, the first and second fluid compartments can be in fluid communication. For example, the first and second fluid compartments can be coupled via a narrow channel. In some aspects, the narrow channel can comprise a narrow gap formed between planar surfaces extending between the first and second fluid compartments. In some related aspects, the superior ends of the first and second substantially frusto-conical fluid compartments are fluidly coupled to an inferior end of a superior fluid compartment. For example, the superior fluid compartment can be a flared compartment from the merger of both the first and second fluid compartments, the superior fluid compartment having a substantially circular cross-sectional shape. In various aspects, the minimum sample volume in the fluid chamber during electrokinetic injection therefrom the fluid chamber can be less than 3 µL (e.g., less than 2 µL).

In various aspects, the cross-sectional shape at an inferior end of the fluid chamber can be substantially rectangular, wherein the major dimension of the cross-section of the fluid chamber is slightly larger than the offset between an electrode and a parallel capillary of a CE probe inserted into the superior end of the fluid chamber and the minor dimension is slightly larger than the diameter of the distal portion of the electrode or capillary. In various aspects, minimum sample volume in the fluid chamber during electrokinetic injection therefrom the fluid chamber can be less than 5 µL.

The body can be sized so as to be retained in a conventional sample tray for use with a CE instrument. In some related aspects, the body can exhibit an increased diameter of its external surface adjacent its inferior end so as to retain the body within the sample tray by a compression fit. In various aspects, a tab extends radially from the external surface of the body to aid in proper alignment of the body within the sample tray relative to the electrode and the capillary configuration of the CE instrument. For example, the tab on a first body disposed within the tray prevents a second, adjacent body from being improperly aligned within the tray. Additionally, the vial comprises a second body coupled to the first body, the second body defining a fluid chamber extending from the superior end for containing a second sample, wherein a cross-sectional shape of the fluid chamber in at least one plane orthogonal to the longitudinal axis of the body exhibits two or fewer axes of symmetry, and wherein the fluid chamber of the first and second body are not fluidly coupled. Coupling between the first body and the second body can aid in proper alignment of the bodies within the sample tray relative to the electrode and capillary configuration of the CE instrument.

In some aspects, the body can exhibit an increased diameter of its external surface about an inferior end of the fluid chamber so as to act as a magnifying lens of the sample contained within the fluid chamber.

In various aspects, the maximum volume defined by the fluid chamber can be about 200 µL or greater and the minimum sample volume in the fluid chamber during electrokinetic injection therefrom can be less than about 3 µL and less than about 2 µL.

In accordance with various aspects of the present teachings, a system for use with an asymmetric sampling probe of an analytical instrument is provided, the system comprising the vial. The system can also include a vial tray configured to retain a plurality of vials.

In various aspects of the system, a tab extends radially from an external surface of the body to aid in proper alignment of the body within the sample tray relative to the electrode and the capillary configuration of the CE instrument. For example, the tab on a first body disposed within the tray can prevent a second, adjacent body from being improperly aligned within the tray.

A second body is coupled to the first body, the second body defining a fluid chamber extending from the superior end for containing a second sample, wherein the fluid chamber of the first and second body are not fluidly coupled. However, the mechanical coupling between the first body and the second body aid in proper alignment of the bodies within the sample tray relative to the electrode and capillary configuration of the CE instrument.

In some aspects of the present teachings, the first fluid compartment is configured to receive a distal end of an electrode of the CE instrument and the second fluid compartment is configured to receive a distal end of a sampling capillary of the CE instrument, wherein the first fluid compartment and the second fluid compartment are in fluid communication. For example, the first fluid compartment can extend from a superior end to an inferior end, the superior end of the first fluid compartment being inferior to the superior end of the body, and the second fluid compartment can extend from a superior end to an inferior end, the superior end of the second fluid compartment being inferior to the superior end of the body. Additionally, in some aspects, the fluid chamber can comprise a superior fluid compartment defining a volume extending from the superior end of the body to an inferior end, wherein first and second fluid compartments extend distally from the inferior end of the proximal fluid compartment.

These and other features of the applicant's teachings are set forth herein.

### BRIEF DESCRIPTION OF THE DRAWINGS

The skilled person in the art will understand that the drawings, described below, are for illustration purposes only. The drawings are not intended to limit the scope of the applicant's teachings in any way.
FIG. 1 schematically depicts an exemplary sample vial having a CE electrode and capillary disposed within a sample contained in a fluid chamber in accordance with various aspects of the applicant's teachings.
FIG. 2 schematically depicts the exemplary sample vial of FIG. 1, with exemplary cross-sections at various levels of the sample vial depicted.
FIG. 3 schematically depicts another exemplary sample vial in accordance with various aspects of the applicant's teachings, with exemplary cross-sections at various levels of the sample vial depicted.
FIG. 4 schematically depicts another exemplary sample vial having a plurality of bodies each containing therewithin a fluid chamber for receiving a CE electrode and capillary.
FIG. 5 schematically depicts the exemplary sample vial of FIG. 2 retained within a conventional sample tray for interfacing with a CE instrument.
FIG. 6 schematically depicts a plurality of the exemplary sample vial of FIG. 2 retained within a conventional sample tray.

### DETAILED DESCRIPTION

It will be appreciated that for clarity, the following discussion will explicate various aspects of embodiments of the applicant's teachings, while omitting certain specific details wherever convenient or appropriate to do so. For example, discussion of like or analogous features in alternative embodiments may be somewhat abbreviated. Well-known ideas or concepts may also for brevity not be discussed in any great detail. The skilled person will recognize that some embodiments of the applicant's teachings may not require certain of the specifically described details in every implementation, which are set forth herein only to provide a thorough understanding of the embodiments. Similarly it will be apparent that the described embodiments may be susceptible to alteration or variation according to common general knowledge without departing from the scope of the disclosure. The following detailed description of embodiments is not to be regarded as limiting the scope of the applicant's teachings in any manner. As used herein, the terms "about" and "substantially equal" refer to variations in a numerical quantity that can occur, for example, through measuring or handling procedures in the real world; through inadvertent error in these procedures; through differences in the manufacture, source, or purity of compositions or reagents; and the like. Typically, the terms "about" and "substantially equal" as used herein means greater or lesser than the value or range of values stated by 1/10 of the stated values, e.g., ±10%. For instance, a concentration value of about 30% or substantially equal to 30% can mean a concentration between 27% and 33%. The terms also refer to variations that would be recognized by one skilled in the art as being equivalent so long as such variations do not encompass known values practiced by the prior art.

In accordance with various aspects of the applicant's teachings, the methods and systems described herein can reduce the minimum volume of sample fluid required to be contained with a sample vial when interfacing the sample vial with an analytical instrument, and particularly, for use in analytical instruments that interact with a sample via a "polar" or asymmetric probe, including in capillary electrophoresis, liquid chromatography, and gas chromatography, by way of non-limiting example. In various aspects, the vials can reduce the waste of expensive and/or scarce samples common in the round vials and vial inserts conventionally used in the art, without sacrificing the ability to use the vials with high-volume analyses. Importantly, in some aspects, the outer shape of the vials according to the present teachings can be substantially identical to the conventional vials that currently used on CE instruments, though the inner shape (i.e., the shape of the fluid chamber) can be formed to optimize low-volume applications. Unlike most conventional vials that allow for a useable range of about 10x (200µL to 2mL full scale for large volume or 20µL to 200µL full scale for small volume inserts), the present teachings can allow for accommodating volumes less than about 2 µL to about 200 µL full scale, by way of non-limiting example. Thus, vials in accordance with various aspects of the present teachings can provide drastically-reduced minimum volume from which electrokinetic injection can occur, as well as a ~10x improvement in sample-size range over current designs currently used.

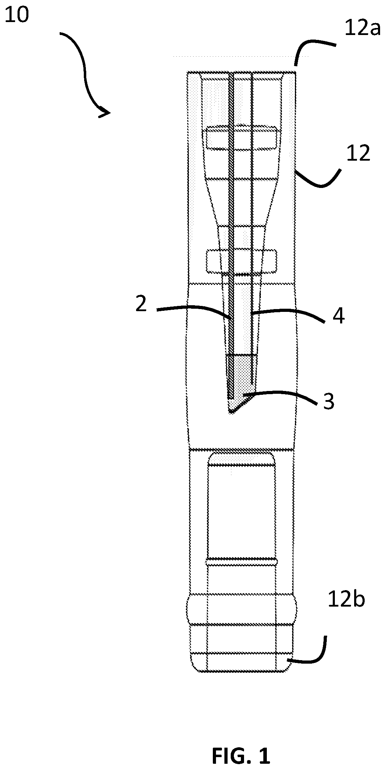

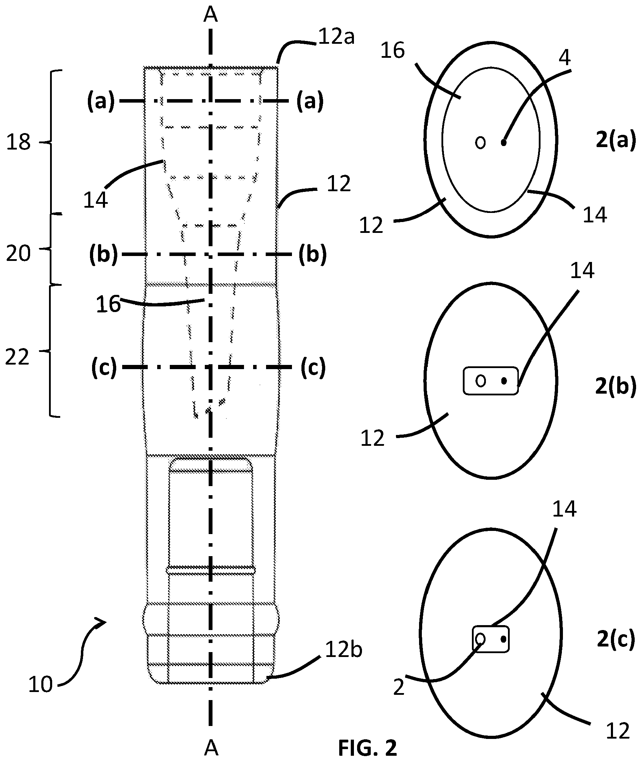

With reference now to FIGS. 1 and 2, an exemplary sample vial 10 in accordance with various aspects of the applicant's teachings is depicted. As shown in FIG. 1, the sample vial 10 generally comprises a solid, cylindrical body 12 extending from a superior end 12a to an inferior end 12b about a longitudinal axis (A). An internal wall 14 extends from the superior end 12a of the cylindrical body 12 defines a fluid chamber 16 for containing a fluid sample 3 within the body 12. As shown in FIG. 1, the vial 10 is interfacing with a CE electrode 2 and a capillary 4 such that the distal most ends are immersed within the sample 2 within the fluid chamber 16.

With specific reference now to FIG. 2, the fluid chamber 16 (shown in phantom) of the sample vial 10 will be described in further detail. In particular, the exemplary fluid chamber 16 extends inferiorly from the superior end 12a of the body 12 into an initial flared superior portion 18, which tapers into a neck 20, and terminates at its inferior end into the low-volume chamber portion 22. As shown in the various cross-sections of FIGS. 2(a)-(c), the fluid chamber 16 can have a variety of cross-sectional shapes throughout its length, but generally, is configured to accommodate the asymmetric orientation of the CE probe (i.e., CE electrode 2 and capillary 4) within a minimal volume of fluid surrounding the probe. That is, as best shown in FIG. 2(c), the internal wall 14 in the bottom of the fluid chamber has a cross-sectional shape of the fluid chamber (i.e., in the plane orthogonal to the longitudinal axis (A)) of the body 12 and exhibits only two axes of symmetry to provides minimal clearance to the parallel electrode 2 and capillary 4. Specifically, the substantially rectangular cross-sectional shape exhibits a first axis of symmetry along its major dimension, which corresponds to the offset between the electrode 2 and the capillary 4, and a second axis of symmetry along the rectangular cross-section's minor dimension (corresponding to the width of the electrode 2). It will be appreciated that a variety of cross-sectional shapes can be formed in accordance with the present teachings to minimize the excess volume at the bottom of the sample well. By way of example, the side of the rectangle for receiving the distal end of the capillary 4 can be further narrowed (resulting in only a single axis of symmetry). In various aspects, minimum sample volume in the fluid chamber during electrokinetic injection therefrom the fluid chamber can therefore be minimized to be less than 5 µL (e.g., 3 µL, 2 µL).

Though FIG. 2(c) demonstrates a minimum sample volume about the distal end of the CE probe, sample vials in accordance with the present teachings can also accommodate high-volume samples in the larger-diameter superior portion 18 of the fluid chamber 16. Though the rectangular cross-sectional shape of the neck 20 (FIG. 2(b)) flares outwardly to a circular cross-sectional shape shown in FIG. 2(a) (having more than two axes of symmetry) to form the superior portion 18, it will be appreciated that any shape (the same or different than the low volume inferior portion 22) can be utilized to form the fluid chamber.

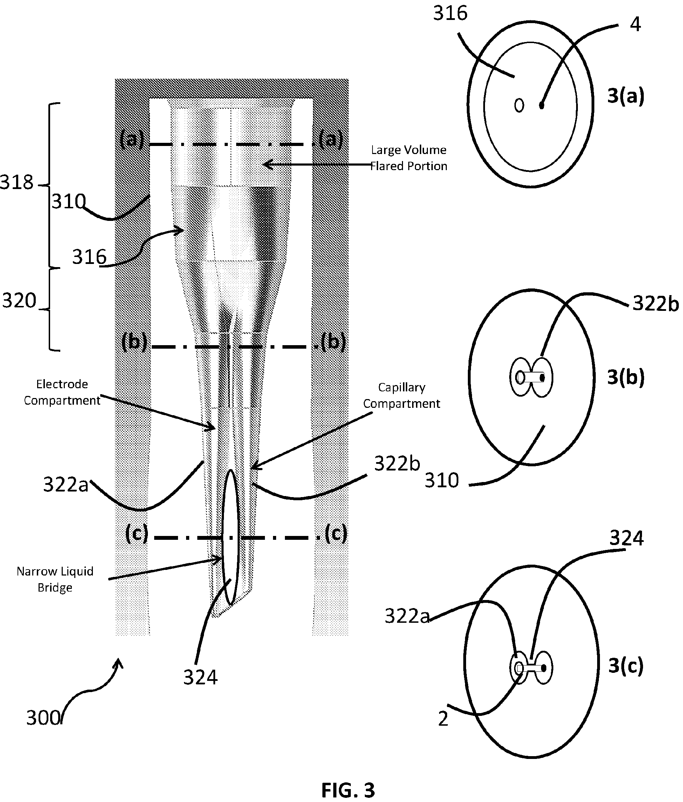

With reference now to FIG. 3, another exemplary vial 300 in accordance with the present teachings is depicted. The vial 310 is substantially similar to that shown in FIGS. 1 and 2 but differs in that the neck and inferior or bottom portion of the fluid chamber 316 further minimizes the fluid volume required to be contained with the sample vial when interfacing with the electrode 2 and capillary 4. Specifically, as shown in FIG. 3, the body 310 defines a frusto-conical fluid compartment 322a configured to be aligned with the electrode 2 and a frusto-conical fluid compartment 322b configured to be aligned with the capillary 4. The frusto-conical fluid compartments 322a,b generally merge at the neck 320 into the flared superior portion 318. Importantly, with even a minimal sample volume, the fluid compartments 322a,b are fluidly coupled via a narrow passage or channel (i.e., a narrow fluid bridge 324, best shown in FIG. 3(c)) that allows for the electric field generated by the electrode 2 to drive the analytes into the capillary 4 during electrokinetic injection, for example. Inspection of the cross-sectional shape of FIG. 3(c) likewise demonstrates only two axes of symmetry. It will be appreciated by a person skilled in the art that though the fluid compartments 322a,b are substantially frusto-conical (and having a circular cross-section), the fluid compartments 322a,b can have a variety of shapes and sizes to minimize sample volume necessary for the asymmetrical CE probe to reliably function. By way of example, as shown in FIG. 3, the electrode compartment 322a that can terminate in an inferior end that is inferior to the inferior end of the capillary compartment 322b in order to accommodate the typical longer length and/or width of the electrode 2 relative to the capillary 4.

In light of the lack of full symmetry provided in vials in accordance with various aspects of the present teachings, c demonstrate additional features that insure that the vials described herein can be used with conventional CE instruments and sample trays and such that the fluid chambers 16, 316 are properly aligned relative to the CE electrode and capillary.

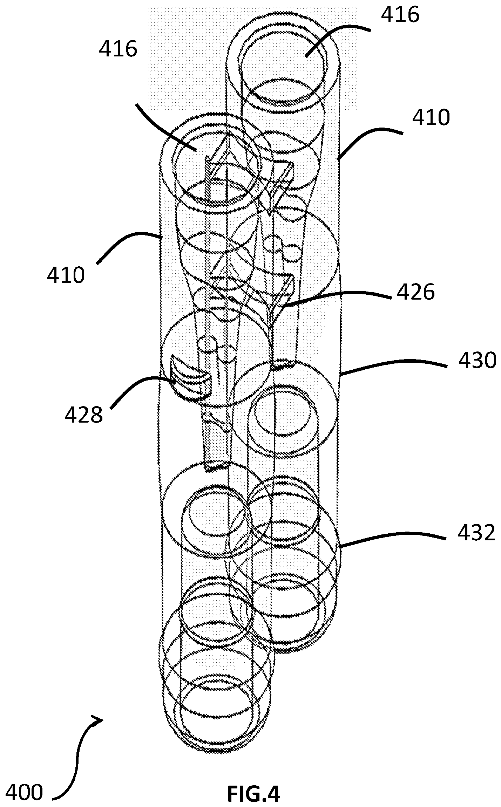

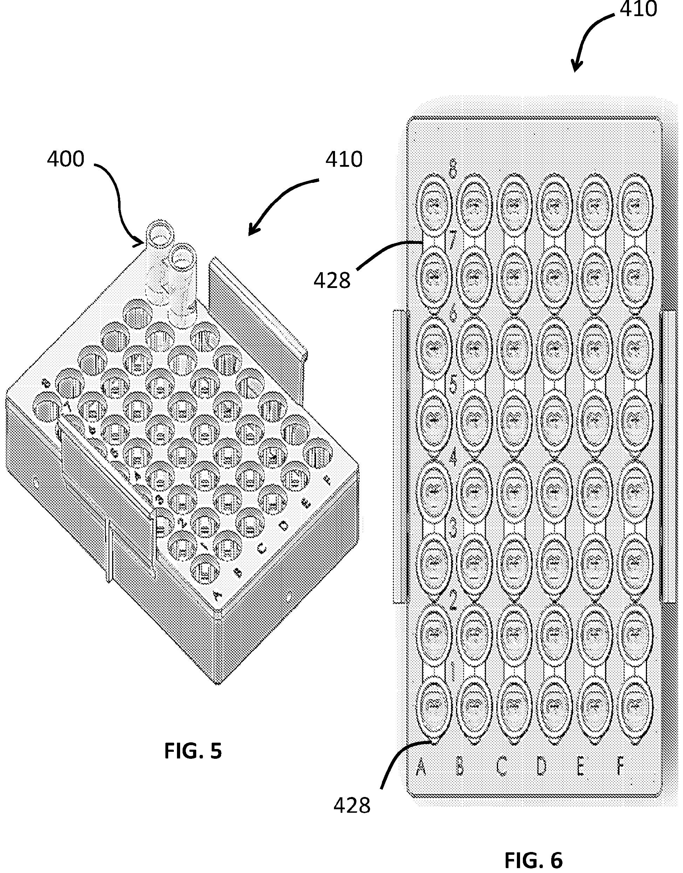

With reference first to FIG. 4, another exemplary vial 400 in accordance with the present teachings is depicted having two bodies 410 of FIG. 1 mechanically coupled to one another via a solid bridge 426. It will be appreciated in light of the present teachings that the mechanical bridge helps align the vials 400 within a conventional vial tray 440 as shown in FIG. 5. For example, the mechanical bridge 426 prevents each individual body 410 from being rotated within the tray 440.

Also as shown in FIG. 4, the exemplary vial includes a tab 428 extending radially outward from the outer surface of the body 410, the tab 428 visually aiding alignment (see FIG. 6) and/or mechanically blocking adjacent vials from being misaligned within the tray 440.

Because of the particularly small sample volumes enabled by the present teachings, the exemplary vial 400 additionally includes an increased diameter portion 430 about the inferior end of the fluid chamber 416. When the vial 400 is formed from a transparent material, this convex, bulge portion 430 can function as a magnifying window so as to view the sample within the fluid chamber 416. Additionally, as shown in FIG. 4, each body 410 can also have a portion 432 at its lower outer surface having an increased diameter so as to ensure that the vial 400 is reliably retained within the bores of the sample tray (e.g., by compression fit).

## Claims

1. A vial (400) for use with a capillary electrophoresis, CE, instrument having a sampling capillary and an electrode, the distal ends of which are configured for immersion within a sample contained with the vial, the vial comprising:
a first body (12) extending from a superior end (12a) to an inferior end (12b) along a longitudinal axis, an external surface of the first body having a circular cross-sectional shape substantially along its entire length from the superior end to the inferior end, an inner wall (14) of the first body defining a first fluid chamber (16) extending from the superior end for containing the sample;
**characterized in that**:
a second body is coupled to the first body;
an external surface of the second body has a circular cross-sectional shape substantially along its entire length from a superior end to an inferior end;
an inner wall of the second body defines a second fluid chamber extending from the superior end for containing a second sample;
the first and second fluid chambers are not fluidly coupled;
a cross-sectional shape of the first fluid chamber in at least one plane orthogonal to the longitudinal axis of the first body exhibits at most two axes of symmetry; and
a cross-sectional shape of the second fluid chamber of the second body in at least one plane orthogonal to the longitudinal axis of the second body exhibits at most two axes of symmetry.

2. The vial (400) of claim 1, wherein the cross-sectional shape of the first fluid chamber of the first body in at least one other plane orthogonal to the longitudinal axis exhibits more than two axes of symmetry.

3. The vial (400) of claim 1, wherein the first fluid chamber (16) of the first body (12) further comprises:
a first fluid compartment (322a) configured to receive a distal end of an electrode of the CE instrument, and
a second fluid compartment (322b) configured to receive a distal end of a sampling capillary of the CE instrument,
wherein the first fluid compartment and the second fluid compartment are in fluid communication.

4. The vial (400) of claim 3, wherein the first fluid compartment (322a) extends along a first longitudinal axis and the second fluid compartment extends along a second longitudinal axis, wherein the first and second longitudinal axes are substantially parallel to the longitudinal axis of the first body;
optionally wherein the first and second longitudinal axes are offset from the longitudinal axis of the first body.
optionally wherein the first longitudinal axis is configured to align with the longitudinal axis of the electrode and the second longitudinal axis is configured to align with the longitudinal axis of the sampling capillary.

5. The vial (400) of claim 3, wherein the first fluid compartment (322a) extends from a superior end to an inferior end, the superior end of the first fluid compartment being inferior to the superior end of a superior fluid portion (318) of the first body and the second fluid compartment (322b) extends from a superior end to an inferior end, the superior end of the second fluid compartment being inferior to the superior end of the superior fluid portion (318) of the first body, and wherein the inferior end of the first fluid compartment is inferior to the inferior end of the second fluid compartment.

6. The vial (400) of claim 3, wherein the first and second fluid compartments (322a, 322b) are substantially frusto-conical.

7. The vial (400) of claim 6, wherein the first and second fluid compartments are coupled via a narrow channel (324) and optionally wherein the narrow channel comprises a narrow gap formed between planar surfaces extending between the first and second fluid compartments.

8. The vial (400) of any one of claims 6 and 7, wherein the superior ends of the first and second substantially frusto-conical fluid compartments are fluidly coupled to an inferior end of a superior fluid compartment (318) and optionally wherein the superior fluid compartment has a substantially circular cross-sectional shape.

9. The vial (400) of claim 1, wherein said cross-sectional shape at an inferior end of the first fluid chamber (16) is substantially rectangular, wherein the major dimension of the cross-section of the first fluid chamber is slightly larger than the offset between an electrode and a parallel capillary of a CE probe inserted into the superior end of the first fluid chamber and optionally wherein the minimum sample volume in the first fluid chamber during electrokinetic injection therefrom can be less than about 5 µL.

10. The vial (400) of claim 1, wherein the first body (12) is sized so as to be retained in a conventional sample tray for use with a CE instrument;
optionally wherein the first body exhibits an increased diameter of its external surface adjacent its inferior end so as to retain the first body within the sample tray by a compression fit.

11. The vial (400) of claim 10, wherein a tab (428) extends radially from the external surface of the first body (12) to aid in proper alignment of the first body within the sample tray relative to the electrode and the capillary configuration of the CE instrument and optionally wherein the tab on the first body disposed within the tray prevents the second body from being improperly aligned within the tray.

12. The vial (400) of claim 1, wherein the coupling between the first body (12) and the second body aid in proper alignment of the first and second bodies within a sample tray relative to the electrode and capillary configuration of the CE instrument.

13. The vial (400) of claim 1, wherein the first body exhibits an increased diameter of its external surface about an inferior end of the fluid chamber so as to act as a magnifying lens of the sample contained within the first fluid chamber.

14. A system for use with an asymmetric sampling probe of a capillary electrophoresis, CE, instrument, the system comprising:
the vial (400) of any one of the preceding claims; and
a vial tray configured to retain a plurality of vials.

15. The system of claim 14, wherein the coupling between the first body (12) and the second body aids in proper alignment of the bodies within the vial tray relative to the electrode and capillary configuration of the CE instrument.

## Patentansprüche

1. Fläschchen (400) zur Verwendung mit einem Kapillarelektrophorese-, CE-, Instrument, das eine Abtastkapillare und eine Elektrode aufweist, deren distale Enden zum Eintauchen in eine in dem Fläschchen enthaltene Probe konfiguriert sind, wobei das Fläschchen Folgendes umfasst:
einen ersten Körper (12), der sich von einem oberen Ende (12a) zu einem unteren Ende (12b) entlang einer Längsachse erstreckt, wobei eine Außenfläche des ersten Körpers entlang seiner gesamten Länge vom oberen Ende zum unteren Ende eine kreisförmige Querschnittsform aufweist, wobei eine Innenwand (14) des ersten Körpers eine erste Fluidkammer (16), die sich vom oberen Ende erstreckt, zum Enthalten der Probe definiert;
**dadurch gekennzeichnet, dass**:
der zweite Körper an den ersten Körper gekoppelt ist;
eine Außenfläche des zweiten Körpers entlang seiner gesamten Länge von einem oberen Ende zu einem unteren Ende eine kreisförmige Querschnittsfläche aufweist;
eine Innenwand des zweiten Körpers eine zweite Fluidkammer, die sich vom oberen Ende erstreckt, zum Enthalten einer zweiten Probe definiert;
die erste und die zweite Fluidkammer fluidisch nicht gekoppelt sind;
eine Querschnittform der ersten Fluidkammer in mindestens einer Ebene orthogonal zur Längsachse des ersten Körpers höchstens zwei Symmetrieachsen aufweist; und
eine Querschnittform der zweiten Fluidkammer des zweiten Körpers in mindestens einer Ebene orthogonal zur Längsachse des zweiten Körpers höchstens zwei Symmetrieachsen aufweist.

2. Fläschchen (400) nach Anspruch 1, wobei die Querschnittform der ersten Fluidkammer des ersten Körpers in mindestens einer anderen Ebene orthogonal zur Längsachse mehr als zwei Symmetrieachsen aufweist.

3. Fläschchen (400) nach Anspruch 1, wobei die erste Fluidkammer (16) des ersten Körpers (12) weiter Folgendes umfasst:
ein erstes Fluidfach (322a), das konfiguriert ist, um ein distales Ende einer Elektrode des CE-Instruments aufzunehmen, und
ein zweites Fluidfach (322b), das konfiguriert ist, um ein distales Ende einer Abtastkapillare des CE-Instruments aufzunehmen,
wobei das erste Fluidfach und das zweite Fluidfach in Fluidverbindung sind.

4. Fläschchen (400) nach Anspruch 3, wobei sich das erste Fluidfach (322a) entlang einer ersten Längsachse erstreckt und das zweite Fluidfach sich entlang einer zweiten Längsachse erstreckt, wobei die erste und die zweite Längsachse im Wesentlichen parallel zur Längsachse des ersten Körpers sind;
wahlweise wobei die erste und die zweite Längsachse von der Längsachse des ersten Körpers versetzt sind.
wahlweise wobei die erste Längsachse konfiguriert ist, um mit der Längsachse der Elektrode ausgerichtet zu sein, und die zweite Längsachse konfiguriert ist, um mit der Längsachse der Abtastkapillare ausgerichtet zu sein.

5. Fläschchen (400) nach Anspruch 3, wobei sich das erste Fluidfach (322a) von einem oberen Ende zu einem unteren Ende erstreckt, wobei das obere Ende des ersten Fluidfachs unter dem oberen Ende eines oberen Fluidabschnitts (318) des ersten Körpers ist und das zweite Fluidfach (322b) sich von einem oberen Ende zu einem unteren Ende erstreckt, wobei das obere Ende des zweiten Fluidfachs unter dem oberen Ende des oberen Fluidabschnitts (318) des ersten Körpers ist, und wobei das untere Ende des ersten Fluidfachs unter dem unteren Ende des zweiten Fluidfachs ist.

6. Fläschchen (400) nach Anspruch 3, wobei das erste und das zweite Fluidfach (322a, 322b) im Wesentlichen kegelstumpfförmig sind.

7. Fläschchen (400) nach Anspruch 6, wobei das erste und das zweite Fluidfach über einen schmalen Kanal (324) gekoppelt sind, und wahlweise wobei der schmale Kanal einen schmalen Spalt umfasst, der zwischen ebenen Oberflächen gebildet ist, die sich zwischen dem ersten und dem zweiten Fluidfach erstrecken.

8. Fläschchen (400) nach einem der Ansprüche 6 und 7, wobei die oberen Enden des ersten und des zweiten im Wesentlichen kegelstumpfförmigen Fluidfachs an ein unteres Ende eines oberen Fluidfachs (318) fluidisch gekoppelt sind, und wahlweise wobei das obere Fluidfach eine im Wesentlichen kreisförmige Querschnittsform aufweist.

9. Fläschchen (400) nach Anspruch 1, wobei die Querschnittsform an einem unteren Ende der ersten Fluidkammer (16) im Wesentlichen rechteckig ist, wobei die Hauptabmessung der Querschnittsform der ersten Fluidkammer etwas größer ist als der Versatz zwischen einer Elektrode und einer parallelen Kapillare einer CE-Sonde, die in das obere Ende der ersten Fluidkammer eingesetzt wird, und wahlweise wobei das Mindestprobevolumen in der ersten Fluidkammer während einer elektrokinetischen Injektion daraus weniger als etwa 5 µL betragen kann.

10. Fläschchen (400) nach Anspruch 1, wobei der erste Körper (12) bemessen ist, um in einer üblichen Probenschale zur Verwendung mit einem CE-Instrument gehalten zu werden;
wahlweise wobei der erste Körper einen vergrößerten Durchmesser seiner Außenfläche angrenzend an seinem unteren Ende aufweist, um den ersten Körper durch eine Klemmverschraubung innerhalb der Probenschale zu halten

11. Fläschchen (400) nach Anspruch 10, wobei sich eine Lasche (428) radial von der Außenfläche des ersten Körpers (12) zur Mitwirkung bei der sachgemäßen Ausrichtung des ersten Körpers innerhalb der Probenschale relativ zur Elektrode und der kapillaren Konfiguration des CE-Instruments erstreckt, und wahlweise wobei die innerhalb der Probenschale auf dem ersten Körper angeordnete Lasche verhindert, dass der zweite Körper unsachgemäß innerhalb der Schale ausgerichtet ist.

12. Fläschchen (400) nach Anspruch 1, wobei das Koppeln zwischen dem ersten Körper (12) und dem zweiten Körper bei der sachgemäßen Ausrichtung des ersten und des zweiten Körpers innerhalb der Probenschale relativ zur Elektrode und der kapillaren Konfiguration des CE-Instruments mitwirkt.

13. Fläschchen (400) nach Anspruch 1, wobei der erste Körper einen vergrößerten Durchmesser seiner Außenfläche um ein unteres Ende der Fluidkammer aufweist, um als Vergrößerungslinse der innerhalb der ersten Fluidkammer enthaltenen Probe zu wirken.

14. System zur Verwendung mit einer asymmetrischen Abtastsonde eines Kapillarelektrophorese-, CE-, Instruments, wobei das System Folgendes umfasst:
das Fläschchen (400) nach einem der vorstehenden Ansprüche; und eine Fläschchenschale, die zum Halten einer Vielzahl von Fläschchen konfiguriert ist.

15. System nach Anspruch 14, wobei das Koppeln zwischen dem ersten Körper (12) und dem zweiten Körper bei der sachgemäßen Ausrichtung der Körper innerhalb der Probenschale relativ zur Elektrode und der kapillaren Konfiguration des CE-Instruments mitwirkt.

## Revendications

1. Flacon (400) pour utilisation avec un instrument d'électrophorèse capillaire, CE, présentant un capillaire d'échantillonnage et une électrode, dont les deux extrémités distales sont configurées pour immersion à l'intérieur d'un échantillon contenu dans le flacon, le flacon comprenant :
un premier corps (12) s'étendant d'une extrémité supérieure (12a) à une extrémité inférieure (12b) le long d'un axe longitudinal, une surface externe du premier corps présentant une forme en section transversale circulaire sensiblement le long de toute sa longueur de l'extrémité supérieure à l'extrémité inférieure, une paroi interne (14) du premier corps définissant une première chambre (16) de fluide s'étendant depuis l'extrémité supérieure pour contenir l'échantillon ;
**caractérisé en ce que** :
un second corps est couplé au premier corps ;
une surface externe du second corps présente une forme en section transversale circulaire sensiblement le long de toute sa longueur d'une extrémité supérieure à une extrémité inférieure ;
une paroi interne du second corps définit une seconde chambre de fluide s'étendant de l'extrémité supérieure pour contenir un second échantillon ;
les première et seconde chambres de fluide ne sont pas fluidiquement couplées ;
une forme en section transversale de la première chambre de fluide dans au moins un plan orthogonal à l'axe longitudinal du premier corps possède au maximum deux axes de symétrie ; et
une forme en section transversale de la seconde chambre de fluide du second corps dans au moins un plan orthogonal à l'axe longitudinal du second corps possède au maximum deux axes de symétrie.

2. Flacon (400) selon la revendication 1, dans lequel la forme en section transversale de la première chambre de fluide du premier corps dans au moins un autre plan orthogonal à l'axe longitudinal possède plus de deux axes de symétrie.

3. Flacon (400) selon la revendication 1, dans lequel la première chambre (16) de fluide du premier corps (12) comprend en outre :
un premier compartiment (322a) de fluide configuré pour recevoir une extrémité distale d'une électrode de l'instrument de CE, et
un second compartiment (322b) de fluide configuré pour recevoir une extrémité distale d'un capillaire d'échantillonnage de l'instrument de CE,
dans lequel le premier compartiment de fluide et le second compartiment de fluide sont en communication fluidique.

4. Flacon (400) selon la revendication 3, dans lequel le premier compartiment (322a) de fluide s'étend le long d'un premier axe longitudinal et le second compartiment de fluide s'étend le long d'un second axe longitudinal, dans lequel les premier et second axes longitudinaux sont sensiblement parallèles à l'axe longitudinal du premier corps ;
facultativement dans lequel les premier et second axes longitudinaux sont sensiblement décalés de l'axe longitudinal du premier corps,
facultativement dans lequel le premier axe longitudinal est configuré pour s'aligner avec l'axe longitudinal de l'électrode et le second axe longitudinal est configuré pour s'aligner avec l'axe longitudinal du capillaire d'échantillonnage.

5. Flacon (400) selon la revendication 3, dans lequel le premier compartiment (322a) de fluide s'étend d'une extrémité supérieure à une extrémité inférieure, l'extrémité supérieure du premier compartiment de fluide étant inférieure à l'extrémité supérieure d'une portion de fluide supérieure (318) du premier corps et le second compartiment (322b) de fluide s'étend d'une extrémité supérieure à une extrémité inférieure, l'extrémité supérieure du second compartiment de fluide étant inférieure à l'extrémité supérieure de la portion de fluide supérieure (318) du premier corps, et dans lequel l'extrémité inférieure du premier compartiment de fluide est inférieure à l'extrémité inférieure du second compartiment de fluide.

6. Flacon (400) selon la revendication 3, dans lequel les premier et second compartiments (322a, 322b) de fluide sont sensiblement tronconiques.

7. Flacon (400) selon la revendication 6, dans lequel les premier et second compartiments de fluide sont couplés via un canal étroit (324) et facultativement dans lequel le canal étroit comprend un espace étroit formé entre des surfaces planaires s'étendant entre les premier et second compartiments de fluide.

8. Flacon (400) selon l'une quelconque des revendications 6 et 7, dans lequel les extrémités supérieures des premier et second compartiments de fluide sensiblement tronconiques sont fluidiquement couplées à une extrémité inférieure d'un compartiment supérieur (318) de fluide et facultativement dans lequel le compartiment supérieur de fluide présente une forme en section transversale sensiblement circulaire.

9. Flacon (400) selon la revendication 1, dans lequel ladite forme en section transversale au niveau d'une extrémité inférieure de la première chambre (16) de fluide est sensiblement rectangulaire, dans lequel la dimension majeure de la section transversale de la première chambre de fluide est légèrement plus grande que le décalage entre une électrode et un capillaire parallèle d'une sonde de CE insérée dans l'extrémité supérieure de la première chambre de fluide
et facultativement dans lequel le volume d'échantillon minimum dans la première chambre de fluide pendant l'injection électrocinétique depuis celle-ci peut être inférieur à 5 µL.

10. Flacon (400) selon la revendication 1, dans lequel le premier corps (12) est dimensionné de manière à être retenu dans un plateau à échantillon classique pour utilisation avec un instrument de CE ;
facultativement dans lequel le premier corps possède un diamètre augmenté de sa surface externe adjacente à son extrémité inférieure de manière à retenir le premier corps dans le plateau à échantillon par un ajustement par compression.

11. Flacon (400) selon la revendication 10, dans lequel une languette (428) s'étend radialement depuis la surface externe du premier corps (12) pour faciliter le bon alignement du premier corps dans le plateau à échantillon par rapport à la configuration d'électrode et de capillaire de l'instrument de CE et facultativement dans lequel la languette sur le premier corps disposée dans le plateau empêche le second corps d'être mal aligné dans le plateau.

12. Flacon (400) selon la revendication 1, dans lequel le couplage entre le premier corps (12) et le second corps facilite le bon alignement des premier et second corps dans un plateau à échantillon par rapport à la configuration d'électrode et de capillaire de l'instrument de CE.

13. Flacon (400) selon la revendication 1, dans lequel le premier corps possède un diamètre augmenté de sa surface externe autour d'une extrémité inférieure de la chambre de fluide de manière à servir de lentille de grossissement de l'échantillon contenu dans la première chambre de fluide.

14. Système pour utilisation avec une sonde d'échantillonnage asymétrique d'un instrument d'électrophorèse capillaire, CE, le système comprenant :
le flacon (400) selon l'une quelconque des revendications précédentes ; et un plateau à flacons configuré pour retenir une pluralité de flacons.

15. Système selon la revendication 14, dans lequel le couplage entre le premier corps (12) et le second corps facilite le bon alignement des corps dans le plateau à flacons par rapport à la configuration d'électrode et de capillaire de l'instrument de CE.
